# EUROPÄISCHE PATENTSCHRIFT

(11) **EP 0 714 215 B1**
(45) Veröffentlichungstag und Bekanntmachung des Hinweises auf die Patenterteilung: **06.10.2004**
(21) Anmeldenummer: 95117136.2
(22) Anmeldetag: 31.10.1995
(51) Int. Cl.: H04Q 3/545

(54) **Verfahren zur Steuerung einer Vermittlungsstelle**
Method for controlling a telephone exchange
Méthode pour commander un central téléphonique

(30) Priorität: 31.10.1994 DE 4438941
(43) Veröffentlichungstag der Anmeldung: 29.05.1996
(73) Patentinhaber: ALCATEL, 75008 Paris (FR)
(72) Erfinder: Kiel, Friedrich, D-71229 Leonberg (DE); Legat, Karl-Heinz, D-71272 Renningen (DE); Daase, Detlef, Dr., D-12205 Berlin (DE)
(74) Vertreter: Brose, Gerhard, Dipl.-Ing.

(56) Entgegenhaltungen:
- EP-A- 0 295 198
- EP-A- 0 420 432
- EP-A- 0 578 964
- WO-A-79/00318
- US-A- 4 479 034
- HOPMANN T.D. ET AL: "A SYSTEM DESIGN FOR REAL TIME SIGNAL PROCESSING" ICASP 86 PROCEEDINGS, Bd. 2, 7. - 11. April 1986, Seiten 1341-1344, XP002120721 TOKYO, JAPAN

## Beschreibung

Die Erfindung betrifft ein Verfahren zum Steuern einer Vermittlungsstelle nach dem Oberbegriff Von Anspruch 1, Steuereinrichtungen nach den Oberbegriffen der Ansprüche 7 und 9, Programm-Module nach den Oberbegriffen der Ansprüche 8 und 10 sowie eine Vermittlungsstelle und ein Vermittlungssystem nach dem Oberbegriff von Anspruch 11 bzw. 14.

Bei Vermittlungssystemen haben sich im Laufe der Zeit zwei Grundtypen von Steuerungen entwickelt. Zum einen Vermittlungssysteme mit einer zentralen Steuerung und zum anderen solche mit verteilter Steuerung. Die Erfindung geht nun sowohl von dem einen als auch von dem anderen Typ von Vermittlungssystemen aus.

In dem Artikel "System 12 - Systemstruktur" aus der Zeitschrift Elektrisches Nachrichtenwesen, Band 56, Nummer 2/3, 1981, der von B. Bonami et al. verfasst wurde, wird beispielsweise ein Vermittlungssystem mit verteilter Steuerung beschrieben.

Eine Vermittlungsstelle besteht hierbei aus einer Vielzahl von Rechnermodulen und einem digitalen Koppelnetz, das sowohl für Sprachverbindungen zwischen Teilnehmern als auch für die Kommunikation zwischen den Rechnermodulen dient. Die Steueraufgaben werden hierbei auf eine Vielzahl gleichberechtigter und gleichartiger Rechnermodule verteilt, die für die Durchführung der Vermittlungsfunktionen zusammenarbeiten.

Weiter wird beispielsweise in dem Artikel "EWSD morgen - zukunftssichere Kommunikation" aus der Zeitschrift "telcom report", Band 11, Heft 6, 1988, der von Nick Skaperda verfasst wurde, eine Vermittlungsstelle mit zentraler Steuerung beschrieben. Eine vermittlungsstelle enthält hier ebenfalls ein digitales Koppelnetz, an das die Teilnehmer über digitale Teilnehmerleitungseinheiten oder Anschlussgruppen angeschlossen sind, die einen Teil der Steuerfunktionen ausführen. Die zentralen Steuerfunktionen werden von einem Koordinationsprozessor ausgeführt. Bei diesem Koordinationsprozessor handelt es sich um ein Mehrprozessorsystem, das in Echtzeitbetrieb arbeitet und mit einem Basisprozessor für O&M-Funktionen (O&M = Operation & Maintenance), einer variablen Anzahl von Vermittlungsprozessoren und einem gemeinsamen Speicher versehen ist.

Bei beiden Typen von Steuerungen stellt sich das Problem, dass die von den Steuerungen auszuführenden Funktionen immer komplexer werden, da die Zahl der von einer Vermittlungsstelle geforderten Leistungsmerkmale ständig wächst. Dies erfordert zum einen einen immer grösseren Entwicklungsaufwand für die Fertigstellung neuer Generationen von Vermittlungsstellen. Zum anderen steigt auch der Bedarf an Rechnerkapazität in den Vermittlungsstellen. Dies führte beispielsweise bei dem oben beschriebenen Vermittlungssystem mit zentraler Steuerung zum Einsatz eines Mehrprozessersystems, mit dem der steigende Bedarf an Realzeitkapazität variabel gedeckt werden kann.

Solch ein Vermittlungssystem mit einer Architektur in der Funktionalität auf periphere Geräte verteilt ist wird in der Europäischen Patentschrift Nr. 0 420 432 A3 beschrieben. Das beschriebene Vorgehen erleichtert Erweiterungen und ermöglicht eine Skalierung der Leistung. Eine Organisationssystemsteuerung zur Steuerung eines digitalen Kommunikationssystems ist in der Europäischen Patentanmeldung Nr. 0 295 198 A1 beschrieben. Der Erfindung liegt nun die Aufgabe zugrunde, den Aufwand für die Steuerung von Vermittlungssystemen zu verringern.

Die Aufgabe wird gelöst durch ein Verfahren nach der Lehre von Anspruch 1, durch Steuereinrichtungen nach der Lehre der Ansprüche 7 und 9, durch Programm-Module nach der Lehre der Ansprüche 8 und 10 sowie durch eine Vermittlungsstelle und ein Vermittlungssystem nach der Lehre von Anspruch 11 bzw. 14.

Der Erfindung liegt die Erkenntnis zugrunde, daß der Aufwand für die Entwicklung und das Testen von Steuerprogrammen in Echtzeit-Implementierung erheblich höher als der für solche in Nicht-Echtzeit-Implementierung ist.

Die Grundidee der Erfindung ist, daß für die Durchführung von Vermittlungsfunktionen zwei Steuereinrichtungen zusammenarbeiten, von denen die eine mittels Steuerprogrammen in Echtzeit-Implementierung Standard-Vermittlungsaufgaben ausführt und die andere mittels Steuerprogrammen in Nicht-Echtzeit-Implementierung sonstige Vermittlungsaufgaben ausführt. Damit wird bewirkt, daß für verschiedene Aufgabentypen verschiedene, angepaßte Steuerprogramm-Implementierungen eingesetzt werden. Diese Idee ist auf beide eingangs genannten Typen von Steuerungen anwendbar.

Vorteilhafte Ausgestaltungen der Erfindung sind den Unteransprüchen zu entnehmen.

Die Erfindung hat den Vorteil, daß sich die Komplexität der Steuerprogramme verringert, da an die Aufgabentypen angepaßte Steuerprogramm-Implementierungen verwendet werden. Dies verringert sowohl den Test- und Entwicklungs-Aufwand als auch den Aufwand in Bezug auf die Rechenkapazität.

Ein weiterer Vorteil der Erfindung ist, daß so eine Trennung von Standard-Vermittlungsaufgaben und Leistungsmerkmalen erreicht wird. Dadurch wird es möglich, die Entwicklungszyklen für diese beiden Bereiche zu trennen, was vorteilhaft ist, da die Entwicklungszyklen für Standard-Vermittlungsaufgaben länger als die für Leistungsmerkmale sind.

Noch ein Vorteil der Erfindung ist, daß zwischen den beiden Steuereinrichtungen eine zentrale Schnittstelle definiert werden kann, so daß sich die Möglichkeit eines offenen Systems bietet.

Im folgenden wird die Erfindung anhand eines Ausführungsbeispiels unter Zuhilfenahme beiliegender Zeichnungen näher erläutert.
- Fig. 1: zeigt ein Blockschaltbild einer Steuerung für eine erfindungsgemäße Vermittlungsstelle.
- Fig. 2: zeigt eine symbolische Darstellung der Architektur eines erfindungsgemäßen Vermittlungssystems mit der erfindungsgemäßen Vermittlungsstelle nach Fig. 1.

In dem Ausführungsbeispiel wird nun die Anwendung des erfindungsgemäßen Verfahrens in einer erfindungsgemäßen Vermittlungsstelle beschrieben, die Teil eines erfindungsgemäßen Vermittlungssystems ist und erfindungsgemäße Steuereinrichtungen enthält, die von erfindungsgemäßen Programmodulen gesteuert werden.

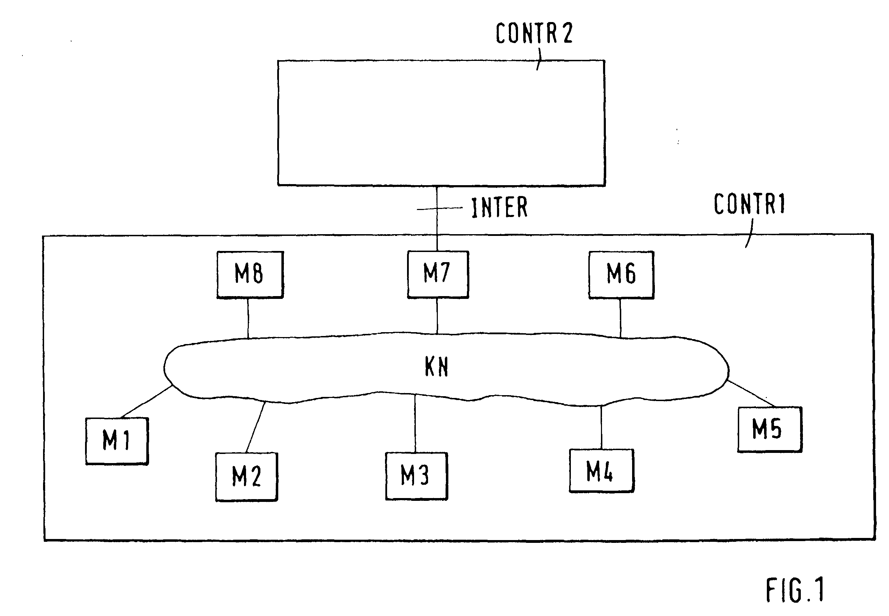

Fig. 1 zeigt eine Steuerung des erfindungsgemäßen Vermittlungssystems. Die Steuerung weist zwei Steuereinheiten CONTR1 und CONTR2 auf, die miteinander Daten austauschen.

Die Steuereinrichtung CONTR1 führt Standart-Vermittlungsaufgaben oder Vermittlungsgrundaufgaben in Echtzeit durch. Sie weist acht Rechnermodule M1 bis M8 auf, die über ein Kommunikationsnetz KN miteinander Daten austauschen. Das Rechnermodul M7 tauscht mit der Steuereinheit CONTR2 Daten aus.

Die Rechnermodule M1 bis M8 bestehen jeweils aus einem Rechner und peripheren Komponenten, die unter anderem den Datenaustausch mit den anderen Rechnermodulen über das Kommunikationsnetz KN ermöglichen. Das Rechnermodul M7 enthält weitere periphere Komponenten, die den Datenaustausch mit der Steuereinrichtung CONTR2 ermöglichen. Die Rechnermodule M1 bis M8 werden jeweils von einem oder von mehreren Steuerprogrammen in Echtzeit-Implementierung gesteuert und führen jeweils einzeln oder gemeinsam Vermittlungsgrundaufgaben in Echtzeit aus. Der genaue Aufbau der Rechnermodule M1 bis M9 kann beispielhaft im Artikel "Hardware-Struktur", Seite 135-147 der Zeitschrift Elektrisches Nachrichtenwesen, Band 58, Nr. 2/3, 1981 oder anderen Artikeln aus diesem Band entnommen werden.

Der Unterschied zwischen einer Echtzeit-Implementierung und einer Nicht-Echtzeit-Implementierung eines Steuerprogramms ist jedem Fachmann bekannt, siehe beispielsweise Kapitel "12.8 Echtzeitsysteme" aus dem Buch "Betriebssysteme: Eine Einführung" aus der Reihe "Handbuch der Informatik" von H.-J. Siegert, das vom R. Oldenburg Verlag München/Wien 1991 herausgegeben wurde. Dieser Unterschied stellt sich vor allem durch die Art der verwendeten Betriebssysteme und der verwendeten Steuerprogramme dar. So ist beispielsweise die Verwendung von Programmierkonzepten, die sich auf eine Darstellung mittels sogenannter Zustands-Automaten stützen, ein deutliches Zeichen für eine Echtzeit-Implementierung eines Steuerprogramms.

Bei dem Kommunikationsnetz KN handelt es sich um das Digitale Koppelnetz, das in einer Vermittlungsstelle auch für die Verbindungen zwischen Teilnehmern genutzt wird. Es ist jedoch auch möglich, daß ein eigenständiges Kommunikationsnetz für den Austausch der Daten zwischen den Rechnermodulen M1 bis M8 verwendet wird.

Die Anzahl von acht Rechnermodulen M1 bis M8 ist hier nur beispielhaft gewählt. Desweiteren ist es auch möglich, daß die Steuereinrichtung CONTR1 nicht aus einer Vielzahl von verteilten Rechnermodulen besteht, sondern daß sie von einem zentralen, leistungsfähigen Rechner gebildet wird, der die Aufgaben der Rechnermodule M1 bis M8 ausführt. Dieser Rechner würde dann diese Aufgaben ebenfalls mittels Steuerprogrammen in Echtzeit-Implementierung durchführen.

Die Steuereinrichtung CONTR2 wird von einem Zentralrechner mit peripheren Komponenten gebildet, die unter anderem den Austausch von Daten mit dem Rechnermodul M7 und den Anschluß von Einrichtungen zur Mensch-Maschine Kommunikation ermöglichen. Die Steuereinrichtung CONTR2 führt sonstige Vermittlungsaufgaben mittels Steuerprogrammen in Nicht-Echtzeit-Implementierung durch.

Es ist auch möglich, daß die Steuereinrichtung CONTR2 nicht von einem Zentralrechner, sondern von mehreren Rechnern gebildet wird, die über ein Kommunikationsnetz miteinander verbunden sind und für die Bearbeitung der Aufgaben der Steuereinrichtung CONTR2 zusammenarbeiten.

Für die Durchführung der Vermittlungsfunktionen arbeiten die beiden Steuereinrichtungen CONTR1 und CONTR2 zusammen. Die Steuereinrichtung CONTR1 führt die Vermittlungsgrundaufgaben in Echtzeit aus und greift, falls es notwendig ist, auf Dienste der Steuereinrichtung CONTR2 zurück. Die Steuereinrichtung CONTR2 führt komplexere Vermittlungsaufgaben wie beispielsweise Leistungsmerkmale aus und übt dabei die Kontrolle über die Rechnermodule M1 bis M8 aus.

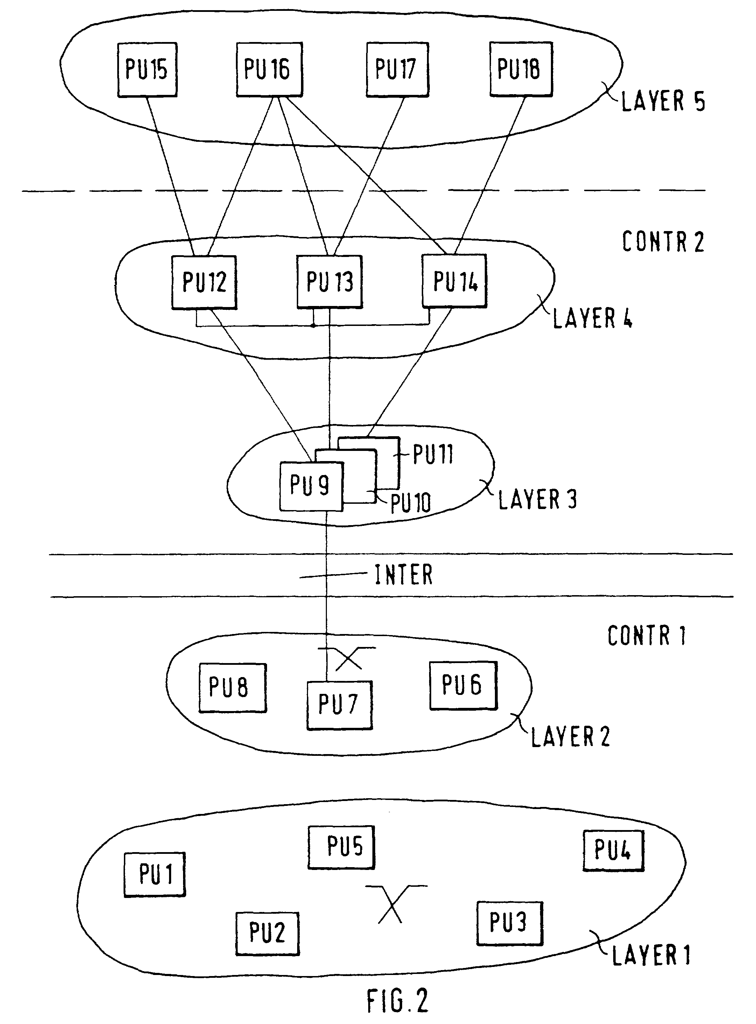

Die Aufteilung verschiedener Vermittlungsaufgaben auf die Steuereinrichtungen CONTR1 und CONTR2 und die Art ihrer Ausführung wird nun anhand von Fig. 2 verdeutlicht, die die Architektur eines erfindungsgemäßen Vermittlungssystems beschreibt.

Fig. 2 zeigt fünf Steuerebenen LAYER1 bis LAYER5.

Die Steuerebenen LAYER1 bis LAYER5 weisen 18 Bearbeitungseinheiten PU1 bis PU18 auf. Jede dieser Bearbeitungseinheiten PU1 bis PU18 führt hierbei eine bestimmte Aufgabe aus und stellt so entweder ein Rechnermodul oder einen Prozeß dar, der auf einem Rechner abläuft.

Die Steuerebenen LAYER1 und LAYER2 sind in der Steuereinrichtung CONTR1, die Steuerebenen LAYER3 und LAYER4 in der Steuereinrichtung CONTR2 angesiedelt. Die Steuerebene LAYER5 ist in einem oder mehreren von der Vermittlungsstelle abgesetzten Rechnersystemen angesiedelt. Solche Rechnersysteme können auch Funktionen für mehrere Vermittlungsstellen bereitstellen. Es ist auch möglich, auf die Steuerebene LAYER5 zu verzichten oder die Steuerebene LAYER5 ebenfalls in der Steuereinrichtung CONTR2 anzusiedeln.

Die Steuerebene LAYER1 enthält die Bearbeitungseinheiten PU1 bis PU5, die Steuerebene LAYER2 enthält die Bearbeitungseinheiten PU6 bis PU8, die Steuerebene LAYER3 enthält die Bearbeitungseinheiten PU9 bis PU11, die Steuerebene LAYER4 enthält die Bearbeitungseinheiten PU12 bis PU14 und die Steuerebene LAYER5 enthält die Bearbeitungseinheiten PU15 bis PU18. Die Bearbeitungseinheiten PU1 bis PU8 der Steuerebenen LAYER1 und LAYER2 sind untereinander über das digitale Koppelnetz verbunden. Die Bearbeitungseinheit PU7 ist mit den Bearbeitungseinheiten PU9 bis PU11 über die Schnittstelle INTER verbunden. Die Bearbeitungseinheiten PU9 bis PU11 der Steuerebene LAYER3 sind mit den Bearbeitungseinheiten PU12 bis PU14 der Steuerebene LAYER4 verbunden. Die Bearbeitungseinheiten PU12 bis PU14 der Steuerebene LAYER4 sind untereinander und mit den Bearbeitungseinheiten PU15 und PU16, PU16 und PU17 bzw. PU16 und PU18 der Steuerebene LAYER5 verbunden.

Die Bearbeitungseinheiten PU1 bis PU5 der Steuerebene LAYER1 werden von den Rechnermodulen M1 bis M5 gebildet. Sie führen dezentrale Funktionen wie Transport- und Routing-Funktionen in Echtzeit aus. Dies bedeutet, daß mehrere der Bearbeitungseinheiten PU1 bis PU5 gleichzeitig dieselbe Aufgabe ausführen.

Die Bearbeitungseinheiten PU6 bis PU8 der Steuerebene LAYER2 werden von den Rechnermodulen M6 bis M8 gebildet. Sie führen teilweise zentralisierte Aufgaben durch, wie beispielsweise Aufgaben, die den Verbindungsaufbau oder das Sammeln von Daten betreffen. Zur Durchführung dieser Aufgaben werden sie von den Bearbeitungseinheiten PU1 bis PU5 der Steuerebene LAYER1 angeregt und greifen ihrerseits steuernd auf diese Bearbeitungseinheiten zu. Es ist hierbei möglich, daß eine feste Zuordnung einer Gruppe von Bearbeitungseinheiten der Steuerebene LAYER1 zu einer Bearbeitungseinheit der Steuerebene LAYER2 besteht (zentrale Steuerung) oder aber nicht besteht (dezentrale Steuerung).

Über die Bearbeitungseinheit PU7 ist es den Bearbeitungseinheiten der Ebene LAYER2 möglich, mit den Bearbeitungseinheiten PU9 bis PU11 der Steuerebene LAYER3 über die Schnittstelle INTER zu kommunizieren. Es ist auch möglich, daß mehrere Bearbeitungseinheiten wie die Bearbeitungseinheit PU7 ausgestaltet sind und so die Bearbeitungseinheiten der Steuerebene LAYER2 über mehrere Verbindungswege, die über die Schnittstelle INTER führen, mit den Bearbeitungseinheiten der Steuerebene LAYER3 kommunizieren.

Die Bearbeitungseinheiten PU9 bis PU11 der Steuerebene LAYER3 stellen Prozesse dar, die auf dem Rechner ablaufen, auf dem die Steuereinrichtung CONTR2 basiert. Sie erhalten sowohl Anforderungen von der Steuerebene LAYER2, in der Aufgaben in Echtzeit ausgeführt werden, als auch von der Steuerebene LAYER4, in der Aufgaben nicht in Echtzeit ausgeführt werden. Die Bearbeitungseinheiten PU9 bis PU11 bearbeiten diese Anforderungen zentral und koordinieren sie. Weiter stellt sie den Bearbeitungseinheiten der Steuerebene LAYER2 und den Bearbeitungseinheiten der Steuerebene LAYER4 Dienste bereit, die diesen ermöglichen, Daten auszutauschen. Der Datenaustausch wird hierbei beispielsweise mittels Dow-/Upload-Mechanismen durchgeführt. Darüberhinaus greifen die Bearbeitungseinheiten PU9 bis PU11 durch Steuerbefehle auf die Bearbeitungseinheiten der Steuerebene LAYER2 zu oder geben Aufgaben oder Nachrichten an die Bearbeitungseinheiten der Steuerebene LAYER4 weiter. Die Steuerebene LAYER3 stellt so die eigentliche Schnittstelle zwischen der Ausführung von Aufgaben mittels einer Echtzeit-Implementierung, wie sie von den Steuerebenen LAYER1 und LAYER2 durchgeführt wird und der Ausführung der Aufgaben mittels Nicht-Echtzeit-Implementierung dar, wie sie von den Steuerebenen LAYER4 und LAYER5 durchgeführt wird.

Die Bearbeitungseinheiten PU12 bis PU14 der Steuerebene LAYER4 stellen ebenfalls Prozesse dar, die auf dem Rechner ablaufen, auf dem die Steuereinrichtung CONTR2 basiert. Diese Prozesse führen die Aufgaben jeweils nach Steuerprogrammen in Nicht-Echtzeit-Implementierung aus und werden von den Bearbeitungseinheiten der Steuerebene LAYER3 oder der Steuerebene LAYER5 gestartet. Die Bearbeitungseinheiten PU12 bis PU14 der Steuerebene LAYER4 führen komplexere Vermittlungsaufgaben, Dienste und O&M-Aufgaben (O&M = Operation & Maintenance) durch. Solche Aufgaben betreffen beispielsweise ISDN-Leistungsmerkmale, Teilnehmerleistungsmerkmale, Centrex-Dienste, Einzelgesprächregistrierung, Dienste und Anwendungen für Mobilfunk oder Intelligente Netze.

Es ist möglich, daß die Steuerebene LAYER4 weiter untergliedert ist und aus zwei oder mehr Unter-Ebenen besteht. Bearbeitungseinheiten einer höheren Unter-Ebene können hierbei beispielsweise einer oder mehreren Bearbeitungseinheiten einer tieferen Unter-Ebene Dienste bereitstellen und Bearbeitungseinheiten einer tieferen Unter-Ebene könnten Teilaufgaben zur Bearbeitung an solche Bearbeitungseinheiten einer höheren Unter-Ebene vergeben.

Es ist weiter möglich, daß Bearbeitungseinheiten der Steuerebene LAYER4 Teil-Aufgaben zur Bearbeitung an Bearbeitungseinheiten der Steuerebene LAYER5 vergeben. Diese Bearbeitungseinheiten der Steuerebene LAYER5 können hierbei auch für mehrere Bearbeitungseinheiten der Steuerebene LAYER4 derselben oder auch verschiedener Vermittlungsstellen bereitstehen.

Im einzelnen ist es vorteilhaft, folgende Funktionen mittels Bearbeitungseinheiten der Steuerebene LAYER4 durchzuführen:
- Funktionen für das Fehlermanagement, beispielsweise das Bereitstellen eines Fehler-Monitors für die Vermittlungsstelle, das Lokalisieren von Fehlern, die Korrelation von Alarmen oder das Abbilden von Alarmen auf Objekt-Modelle.
- Vor- und Nachbearbeitung von Daten, die keinen hohen Zeitanforderungen unterliegen. Solche Daten sind beispielsweise Meßdaten, Gebührendaten, Teilnehmerdaten oder Daten über Kommunikationswege.
- Bereitstellen eines Q3-Adapters für den Anschluß an eine Netzwerkmanagement-Zentrale.
- Bereitstellung und Aufarbeitung von Statistik-Daten.
- Funktionen zum graphischen Darstellen des Zustandes der Vermittlungsstelle.

Auch das Durchführen von Netzwerkmanagement bezogenen Vermittlungs-Funktionen oder -Funktionsteilen mittels Bearbeitungseinheiten der Steuerebene LAYER4 ist vorteilhaft, sofern diese Funktionen lediglich lokale Daten und Mechanismen der Vermittlungsstelle betreffen. Solche Funktionen bestehen beispielsweise in der Verwaltung der Wegesuche oder der Nummernanalyse, der Gebühren- und Trarifierungsverwaltung, Verwaltung des Teilnehmerzugangs, Verkehrsfluß-Verwaltung oder Verwaltung des allgemeinen Signalisierungssystems. Desweiteren ist es möglich, Netzwerkmanagement bezogene Funktionen wie die Teilnehmer-Verwaltung oder die Verwaltung des Übertragungsnetzes oder die Systemsicherheit betreffende Funktionen mittels Bearbeitungseinheiten der Steuerebene LAYER4 durchzuführen.

Die Bearbeitungseinheiten PU15 bis PU18 der Steuerebene LAYER5 stellen Verwaltungsfunktionen für den Betrieb der Vermittlungsstelle und den von ihr angebotenen Diensten bereit. Sie führen so Aufgaben des Dienste- und Netzwerk-Managements durch. Hierzu kommunizieren sie mit Bearbeitungseinheiten der Steuerebene LAYER4, von denen sie Daten anfordern oder an die sie Steuerbefehle geben. Die Bearbeitungseinheiten PU15 bis PU18 führen somit Funktionen durch, die üblicherweise in einer Netzwerkmanagement-Zentrale angesiedelt sind. Es ist somit möglich, daß Bearbeitungseinheiten der Bearbeitungseinheiten PU15 bis PU18 der Steuerebene LAYER5 mit mehreren Vermittlungsstellen des Vermittlungssystems oder mit sämtlichen Vermittlungsstellen des Vermittlungssystems zusammenarbeiten.

## Patentansprüche

1. Verfahren zum Steuern einer Vermittlungsstelle, in dem zwei verschiedenartige Steuereinrichtungen (CONTR1, CONTR2), die erste (CONTR1) und die zweite Steuereinrichtung (CONTR2), für die Durchführung von Vermittlungsfunktionen zusammenarbeiten und hierfür miteinander kommunizieren **dadurch gekennzeichnet, dass** die erste Steuereinrichtung (CONTR1) Standard-Vermittlungsaufgaben mittels Steuerprogrammen in Echtzeit-Implementierung ausführt und dass die zweite Steuereinrichtung (CONTR2) sonstige Vermittlungsaufgaben mittels Steuerprogrammen in Nicht-Echtzeit-Implementierung ausführt.

2. Verfahren nach Anspruch 1,
**dadurch gekennzeichnet, dass** die Steuereinrichtungen (CONTR1, CONTR2) von einer Vielzahl von in zwei oder mehr Steuerebenen (LAYER1 bis LAYER4) hierarchisch gegliederten Bearbeitungseinheiten (PU1 bis PU14) gebildet werden und dass die Bearbeitungseinheiten (PU 1 bis PU 14) verschiedener Steuerebenen unterschiedliche Aufgabentypen bearbeiten.

3. Verfahren nach Anspruch 1,
**dadurch gekennzeichnet, dass** die erste (CONTR1) und die zweite Steuereinrichtung (CONTR2) über eine zentrale logische Schnittstelle (INTER) miteinander kommunizieren.

4. Verfahren nach Anspruch 2 und Anspruch 3,
**dadurch gekennzeichnet, dass** sowohl die Steuerebenen (LAYER1, LAYER2) der ersten (CONTR1) als auch die Steuerebenen (LAYER3 bis LAYER5) der zweiten Steuereinrichtung (CONTR2) zur zentralen logischen Schnittstelle (INTER) hin die Aufgaben zentralisieren und von der zentralen logischen Schnittstelle (INTER) weg dezentralisieren.

5. Verfahren nach Anspruch 2,
**dadurch gekennzeichnet, dass** Bearbeitungseinheiten (PU9 bis PU14) von logischen Prozessen gebildet werden, die von einem Rechner bearbeitet werden.

6. Verfahren nach Anspruch 2,
**dadurch gekennzeichnet, dass** Bearbeitungseinheiten (PU1 bis PU8) von Rechnermodulen (M1 bis M8) gebildet werden.

7. Steuereinrichtung (CONTR2) für eine Vermittlungsstelle, wobei diese Steuereinrichtung (CONTR2) mit einer weiteren, von dieser verschiedenartigen Steuereinrichtung (CONTR1) verbunden ist **dadurch gekennzeichnet, dass** die weitere Steuereinrichtung (CONTR1) so ausgestalltet ist, dass die Standard-Vermittlungsaufgaben mittels Steuerprogrammen in Echtzeit-Implementierung ausführt, und dass die Steuereinrichtung (CONTR2) so ausgestaltet ist, dass sie sonstige Vermittlungsaufgaben mittels Steuerprogrammen in Nicht-Echtzeit-Implementierung ausführt, für die Durchführung von Vermittlungsfunktionen mit der weiteren Steuereinheit (CONTR1) zusammenarbeitet und mit dieser kommuniziert.

8. Programm-Modul für eine Vermittlungsstelle, das für die Ausführung in einer Steuereinrichtung (CONTR2) der Vermittlungsstelle bestimmt ist und einen Satz von Steuerbefehlen enthält,
**dadurch gekennzeichnet, dass** der Satz von Steuerbefehlen so strukturiert ist, dass er Steuerprogrammen in Nicht-Echtzeit-Implementierung entspricht und bei seiner Ausführung in der Steuereinrichtung (CONTR2) den Ablauf in der Steuereinrichtung (CONTR2) derart steuert, dass die Steuereinrichtung (CONTR2) sonstige Vermittlungsaufgaben ausführt und für die Durchführung von Vermittlungsfunktionen mit einer weiteren, verschiedenartigen Steuereinrichtung (CONTR1) zusammenarbeitet und kommuniziert, die mittels Steuerprogrammen in Echtzeit-Implementierung Standard-Vermittlungsaufgaben ausführt.

9. Steuereinrichtung (CONTR1) für eine Vermittlungsstelle, wobei diese Steuereinrichtung (CONTR1) mit einer weiteren, von dieser verschiedenartigen Steuereinrichtung (CONTR2) verbunden ist
**dadurch gekennzeichnet, dass** die weitere Steuereinrichtung (CONTR2) so ausgestalltet ist, dass sie Vermittlungsaufgaben mittels Steuerprogrammen in Nicht-Echtzeit-Implementierung ausführt, und dass die Steuereinrichtung (CONTR1) so ausgestaltet ist, dass sie Standard-Vermittlungsaufgaben mittels Steuerprogrammen in Echtzeit-Implementierung ausführt, für die Durchführung von Vermittlungsfunktionen mit der weiteren Steuereinrichtung (CONTR2) zusammenarbeitet und mit dieser kommuniziert.

10. Programm-Modul für eine Vermittlungsstelle, das für die Ausführung in einer Steuereinrichtung (CONTR1) der Vermittlungsstelle bestimmt ist und einen Satz von Steuerbefehlen enthält,
**dadurch gekennzeichnet, dass** der Satz von Steuerbefehlen so strukturiert ist, dass er Steuerprogrammen in Echtzeit-Implementierung entspricht und bei seiner Ausführung in der Steuereinrichtung (CONTR1) den Ablauf in der Steuereinrichtung (CONTR1) derart steuert, dass die Steuereinrichtung (CONTR1) Standard-Vermittlungsaufgaben ausführt und für die Durchführungen von Vermittlungsfunktionen mit einer weiteren, verschiedenartigen Steuereinrichtung (CONTR2) zusammenarbeitet und kommuniziert, die mittels Steuerprogrammen in Nicht-Echtzeit-Implementierung sonstige Vermittlungsaufgaben ausführt.

11. Vermittlungsstelle mit einem Koppelnetz und einer Steuerung, die aus einer ersten (CONTR1) und einer davon verschiedenartigen zweiten Steuereinrichtung (CONTR2) besteht,
**dadurch gekennzeichnet, dass** die erste Steuereinrichtung (CONTR1) so ausgestaltet ist, dass sie Standard-Vermittlungsaufgaben mittels Steuerprogrammen in Echtzeit-Implementierung ausführt, und dass die zweite Steuereinrichtung (CONTR2) so ausgestaltet ist, dass sie sonstige Vermittlungsaufgaben mittels Steuerprogrammen in Nicht-Echtzeit-Implementierung ausführt und für die Durchführung von Vermittlungsfunktionen mit der ersten Steuereinrichtung (CONTR1) zusammenarbeitet und kommuniziert.

12. Vermittlungsstelle nach Anspruch 11,
**dadurch gekennzeichnet, dass** die erste Steuereinrichtung (CONTR1) aus einer Vielzahl von Rechnermodulen (M1 bis M8) besteht.

13. Vermittlungsstelle nach Anspruch 11,
**dadurch gekennzeichnet, dass** die zweite Steuereinrichtung (CONTR2) aus einem Zentralrechner besteht, der so ausgestaltet ist, dass er mehrere logische Prozesse bearbeitet.

14. Vermittlungssystem mit einer Vielzahl von Vermittlungsstellen, die jeweils mit einer Steuerung und einem Koppelnetz versehen sind, wobei die Steuerungen von Vermittlungsstellen jeweils aus einer ersten (CONTR1) und einer davon verschiedenartigen zweiten Steuereinrichtung (CONTR2) bestehen,
**dadurch gekennzeichnet, dass** die erste Steuereinrichtung (CONTR1) so ausgestaltet ist, dass sie Standard-Vermittlungsaufgaben mittels Steuerprogrammen in Echtzeit-Implementierung ausführt, dass die zweite Steuereinrichtung (CONTR2) so ausgestaltet ist, dass sie sonstige Vermittlungsaufgaben mittels Steuerprogrammen in Nicht-Echtzeit-Implementierung ausführt und für die Durchführung von Vermittlungsfunktionen mit der ersten Steuereinrichtung (CONTR1) zusammenarbeitet und kommuniziert, und dass mindestens eine der zweiten Steuereinrichtungen (CONTR2) so ausgestaltet ist, dass sie übergeordnete Funktionen für mehrere Vermittlungsstellen ausführt.

## Claims

1. A method of controlling an exchange wherein two different control facilities (CONTR1, CONTR2), a first control facility (CONTR1) and a second control facility (CONTR2), cooperate in executing switching functions and communicate with one another for this purpose,
**characterized in that** the first control facility (CONTR1) executes standard switching tasks by means of real-time control programs, and that the second control facility (CONTR2) executes other switching tasks by means of non-real-time control programs.

2. A method as claimed in claim 1,
**characterized in that** the control facilities (CONTR1, CONTR2) are formed by a plurality of processing units (PU1 to PU14) hierarchically arranged in two or more layers (LAYER1 to LAYER4), and that the processing units (PU1 to PU14) of different layers handle different types of tasks.

3. A method as claimed in claim 1,
**characterized in that** the first and second control facilities (CONTR1, CONTR2) communicate with one another via a central logic interface (INTER).

4. A method as claimed in claims 2 and 3,
**characterized in that** both the layers (LAYER1, LAYER2) of the first control facility (CONTR1) and the layers (LAYER3 to LAYER5) of the second control facility (CONTR2) centralize the tasks toward the central logic interface (INTER) and decentralize the tasks away from the central logic interface (INTER).

5. A method as claimed in claim 2,
**characterized in that** processing units (PU9 to PU14) are formed by logic processes which are executed by a computer.

6. A method as claimed in claim 2,
**characterized in that** processing units (PU1 to PUB) are formed by computer modules (M1 to M8).

7. A control facility (CONTR2) for an exchange, the control facility (CONTR2) being connected to a further control facility (CONTR1) which is different therefrom, **characterized in that** the further control facility (CONTR1) executes standard switching tasks by means of real-time control programs, and that the control facility (CONTR2) is designed to execute other switching tasks by means of non-real-time control programs and to cooperate and communicate with the further control facility (CONTR1) in executing switching functions.

8. A program module for an exchange which is designed for execution in a control facility (CONTR2) of the exchange and contains a set of control instructions,
**characterized in that** the set of control instruction is structured so that it corresponds to real-time control programs and, when executed in the control facility (CONTR2), controls operations in the control facility (CONTR2) in such a way that the control facility (CONTR2) executes other switching tasks and cooperates and communicates with a further, different control facility (CONTR1) in executing switching functions, the further control facility (CONTR1) executing standard switching tasks by means of real-time control programs.

9. A control facility (CONTR1) for an exchange, the control facility (CONTR1) being connected to a further control facility (CONTR2) which is different therefrom, **characterized in that** the further control facility (CONTR2) is designed to execute switching tasks by means of non-real-time control programs, and that the control facility (CONTR1) is designed to execute standard switching tasks by means of real-time control programs and to cooperate and communicate with the further control facility (CONTR2) in executing switching functions.

10. A program module for an exchange which is designed for execution in a control facility (CONTR1) of the exchange and contains a set of control instructions, **characterized in that** the set of control instructions is so structured that it corresponds to real-time control programs and, when executed in the control facility (CONTR1), controls operations in the control facility (CONTR1) in such a way that the control facility (CONTR1) executes standard switching tasks and cooperates and communicates with a further, different control facility (CONTR2) in executing switching functions, the further control facility (CONTR2) executing other switching tasks by means of non-real-time control programs.

11. An exchange comprising a switching network and control means which consist of a first control facility (CONTR1) and a second control facility (CONTR2) which is different from the first control facility (CONTR1), **characterized in that** the first control facility (CONTR1) is designed to execute standard switching tasks by means of real-time control programs, and that the second control facility (CONTR2) is designed to execute other switching tasks by means of non-real-time control programs and to cooperate and communicate with the first control facility (CONTR1) in executing switching functions.

12. An exchange as claimed in claim 11,
**characterized in that** the first control facility (CONTR1) consists of a plurality of computer modules (M1 to M8).

13. An exchange as claimed in claim 11,
**characterized in that** the second control facility (CONTR2) is formed by a host computer designed to execute several logic processes.

14. A switching system comprising a plurality of exchanges each provided with control means and a switching network, the control means consisting of a first control facility (CONTR1) and a second control facility (CONTR2) which is different from the first control facility (CONTR1),
**characterized in that** the first control facility (CONTR1) is designed to execute standard switching tasks by means of real-time control programs, that the second control facility (CONTR2) is designed to execute other switching tasks by means of non-real-time control programs and to cooperate and communicate with the first control facility (CONTR1) in executing switching functions, and that at least one of the second control facilities (CONTR2) is designed to execute higher-level functions for several exchanges.

## Revendications

1. Procédé de commande d'un centre de commutation, dans lequel deux dispositifs de commande de type différent (CONTR1, CONTR2), le premier dispositif de commande (CONTR1) et le deuxième dispositif de commande (CONTR2), coopèrent pour la réalisation de fonctions de commutation et communiquent à cet effet l'un avec l'autre, **caractérisé en ce que** le premier dispositif de commande (CONTR1) exécute des tâches de commutation standard au moyen de programmes de commande dans une version en temps réel et **en ce que** le deuxième dispositif de commande (CONTR2) exécute des tâches de commutation diverses au moyen de programmes de commande dans une version hors temps réel.

2. Procédé selon la revendication 1, **caractérisé en ce que** les dispositifs de commande (CONTR1, CONTR2) sont formés par une pluralité d'unités de traitement (PU1 à PU14) hiérarchisées en deux ou plusieurs niveaux de commande (LAYER1 à LAYER4), et **en ce que** les unités de traitement (PU1 à PU14) de différents niveaux de commande traitent différents types de tâches.

3. Procédé selon la revendication 1, **caractérisé en ce que** le premier dispositif de commande (CONTR1) et le deuxième dispositif de commande (CONTR2) communiquent ensemble par une interface logique centrale (INTER).

4. Procédé selon la revendication 2 ou 3, **caractérisé en ce que** tant les niveaux de commande (LAYER1, LAYER2) du premier dispositif de commande (CONTR1) que les niveaux de commande (LAYER3 à LAYER5) du deuxième dispositif de commande (CONTR2) centralisent les tâches en direction de l'interface logique centrale (INTER) et décentralisent les tâches en les éloignant de l'interface logique centrale (INTER).

5. Procédé selon la revendication 2, **caractérisé en ce que** les unités de traitement (PU9 à PU14) sont formées par des processus logiques qui sont traités par un ordinateur.

6. Procédé selon la revendication 2, **caractérisé en ce que** les unités de traitement (PU1 à PU8) sont formées par des modules informatiques (M1 à M8).

7. Dispositif de commande (CONTR2) pour un centre de commutation, dans lequel ce dispositif de commande (CONTR2) est relié à un dispositif de commande supplémentaire (CONTR1) différent de celui-ci, **caractérisé en ce que** le dispositif de commande supplémentaire (CONTR1) est configuré de telle sorte que les tâches de commutation standard sont exécutées au moyen de programmes de commande dans une version en temps réel, et **en ce que** le dispositif de commande (CONTR2) est configuré de telle sorte qu'il exécute les tâches de commutation diverses au moyen de programmes de commande dans une version hors temps réel, coopère pour la réalisation de fonctions de commutation avec le dispositif de commande supplémentaire (CONTR1) et communique avec celui-ci.

8. Module de programme pour un centre de commutation destiné à s'exécuter sur un dispositif de commande (CONTR2) du centre de commutation et comprenant un jeu d'instructions de commande, **caractérisé en ce que** le jeu d'instructions de commande est structuré de telle sorte qu'il correspond à des programmes de commande dans une version hors temps réel, et lorsqu'il est exécuté sur le dispositif de commande (CONTR2), il commande le processus dans le dispositif de commande (CONTR2) de telle sorte que le dispositif de commande (CONTR2) exécute des tâches de commutation diverses et pour la réalisation de fonctions de commutation coopère et communique avec un dispositif de commande supplémentaire (CONTR1) de type différent qui exécute des tâches de commutation standard au moyen de programmes de commande dans une version en temps réel.

9. Dispositif de commande (CONTR1) pour un centre de commutation, dans lequel ce dispositif de commande (CONTR1) est relié à un dispositif de commande supplémentaire (CONTR2) différent de celui-ci, **caractérisé en ce que** le dispositif de commande supplémentaire (CONTR2) est configuré de telle sorte qu'il exécute des tâches de commutation au moyen de programmes de commande dans une version hors temps réel, et **en ce que** le dispositif de commande (CONTR1) est configuré de telle sorte qu'il exécute des tâches de commutation standard au moyen de programmes de commande dans une version en temps réel, coopère pour l'exécution de fonctions de commutation avec le dispositif de commande supplémentaire (CONTR2) et communique avec celui-ci.

10. Module de programme pour un centre de commutation destiné à s'exécuter sur un dispositif de commande (CONTR1) du centre de commutation et comprenant un jeu d'instructions de commande, **caractérisé en ce que** le jeu d'instructions de commande est structuré de telle sorte qu'il correspond à des programmes de commande dans une version en temps réel, et lorsqu'il est exécuté sur le dispositif de commande (CONTR1) il commande le processus dans le dispositif de commande (CONTR1) de telle sorte que le dispositif de commande (CONTR1) exécute des tâches de commutation standard et pour la réalisation de fonctions de commutation coopère et communique avec un dispositif de commande supplémentaire (CONTR2) de type différent qui exécute des tâches de commutation diverses au moyen de programmes de commande dans une version hors temps réel.

11. Centre de commutation avec un réseau de connexion et une commande qui se compose d'un premier dispositif de commande (CONTR1) et d'un deuxième dispositif de commande (CONTR2) différent de celui-ci, **caractérisé en ce que** le premier dispositif de commande (CONTR1) est configuré de telle sorte qu'il exécute des tâches de commutation standard au moyen de programmes de commande dans une version en temps réel, et **en ce que** le deuxième dispositif de commande (CONTR2) est configuré de telle sorte qu'il exécute des tâches de commutation diverses au moyen de programmes de commande dans une version hors temps réel et coopère et communique avec le premier dispositif de commande (CONTR1) pour réaliser des fonctions de commutation.

12. Centre de commutation selon la revendication 11, **caractérisé en ce que** le premier dispositif de commande (CONTR1) se compose d'une pluralité de modules informatiques (M1 à M8).

13. Centre de commutation selon la revendication 11, **caractérisé en ce que** le deuxième dispositif de commande (CONTR2) se compose d'un ordinateur central qui est configuré de telle sorte qu'il traite plusieurs processus logiques.

14. Système de commutation avec une pluralité de centres de commutation qui sont respectivement munis d'une commande et d'un réseau de connexion, dans lequel les commandes de centres de commutation se composent respectivement d'un premier dispositif de commande (CONTR1) et d'un deuxième dispositif de commande (CONTR2) différent de celui-ci, **caractérisé en ce que** le premier dispositif de commande (CONTR1) est configuré de telle sorte qu'il exécute des tâches de commutation standard au moyen de programmes de commande dans une version en temps réel, **en ce que** le deuxième dispositif de commande (CONTR2) est configuré de telle sorte qu'il exécute des tâches de commutation diverses au moyen de programmes de commande dans une version hors temps réel et coopère et communique avec le premier dispositif de commande pour réaliser des fonctions de commutation, et **en ce qu'**au moins l'un des deuxièmes dispositifs de commande (CONTR2) est configuré de telle sorte qu'il exécute des fonctions d'ordre supérieur pour plusieurs centres de commutation.
